# EUROPEAN PATENT SPECIFICATION

(11) **EP 0 472 524 B1**
(45) Date of publication and mention of the grant of the patent: **14.12.1994**
(21) Application number: 90903985.1
(22) Date of filing: 08.02.1990
(51) Int. Cl.: G01R 23/16, H04M 3/22

(54) **DEVICE FOR IDENTIFYING TRAFFIC ON A PAIRED CABLE**
VORRICHTUNG ZUR IDENTIFIKATION VON NACHRICHTENVERKEHR AUF MEHRADRIGEM KABEL
DISPOSITIF D'IDENTIFICATION DU TRAFIC DES TELECOMMUNICATIONS DANS UN CABLE JUMELE

(43) Date of publication of application: 04.03.1992
(73) Proprietor: TELIA AB, 123 86 Farsta (SE)
(72) Inventor: LATOUR-HENNER, Alexander, S-123 86 Farsta (SE); ISHEDEN, Björn, S-123 86 Farsta (SE)
(74) Representative: Karlsson, Berne
(86) International application number: SE9000081
(87) International publication number: WO9112535

(56) References cited:
- US-A- 4 620 147
- US-A- 4 777 645

## Description

### Field of the invention

The invention relates to a device for interference-free identification of telecommunication traffic occupying a pair in a paired cable. The identification encompasses all types of traffic on said type of cable existing at present and planned in the future. Identification of the cable is required inter alia in order to identify the cable itself and in order to avoid disconnection of important connections, e.g. data and alarm connections. The various types of traffic can be identified because of their different frequency ranges and levels.

### State of the art

A number of devices for identifying traffic are known. Common to these devices is that electrical filters are used to separate the desired information from the signal. However, electrical filters are expensive and the devices have a complicated structure.

### Summary of the invention

The present invention provides a device for identifying traffic, which device has a simple structure and is made of cheap and reliable components. The features of the invention are a broadband limiter connected to the paired cable and delivering an output signal having essentially constant amplitude and a frequency corresponding to the strongest frequency component of the input signal, and a frequency indicator indicating the frequency range of said frequency component.

The limiter comprises either an amplifier constructed of series-connected inverters or of an amplifier constructed of an operational amplifier and a Schmitt trigger.

The frequency indicator comprises either a fixed gate network or a programable memory. The indication is executed e.g. by flashing light-emitting diodes.

### Brief description of the drawings

The invention now will be described with reference to the appended drawings, in which
Fig. 1 is a diagram showing frequency and level of different types of traffic;
Fig. 2 is a block diagram of the invention;
Fig. 3 is a simplified circuit diagram of a first embodiment of the invention;
Fig. 4 is a simplified circuit diagram of a second embodiment of the present invention; and
Fig. 5 is a diagram of a software decoder in accordance with the present invention.

### Detailed description of the preferred embodiments of the invention

The object of the invention is to be able to work without interfering in the line network. This presupposes that you have a knowledge about types of traffic existing on the different cables of the network. The purpose of the device of the invention is to indicate what type of traffic is occupying a connection.

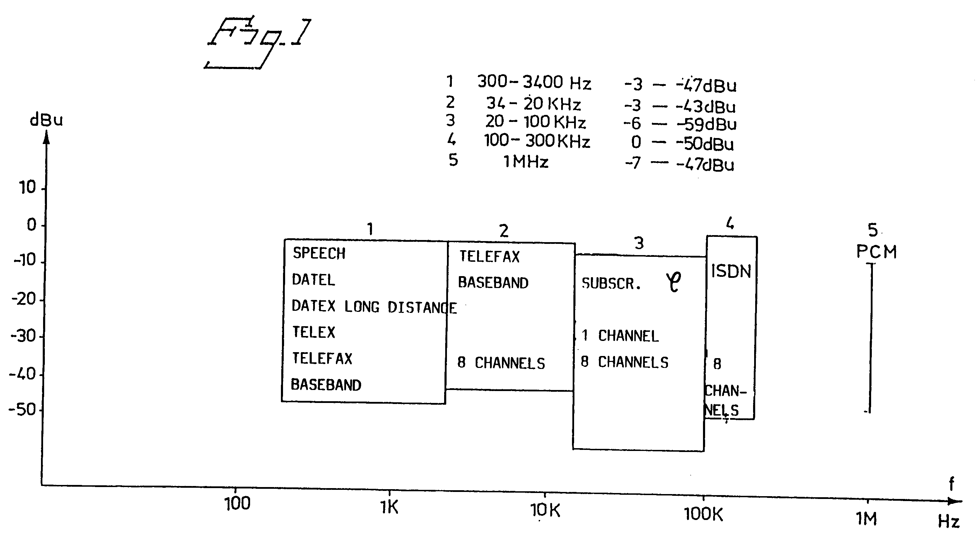

Fig. 1 shows a diagram of the frequencies and levels of existing and planned types of traffic. Thus, the different types of traffic encompasses a large range of levels and frequencies.

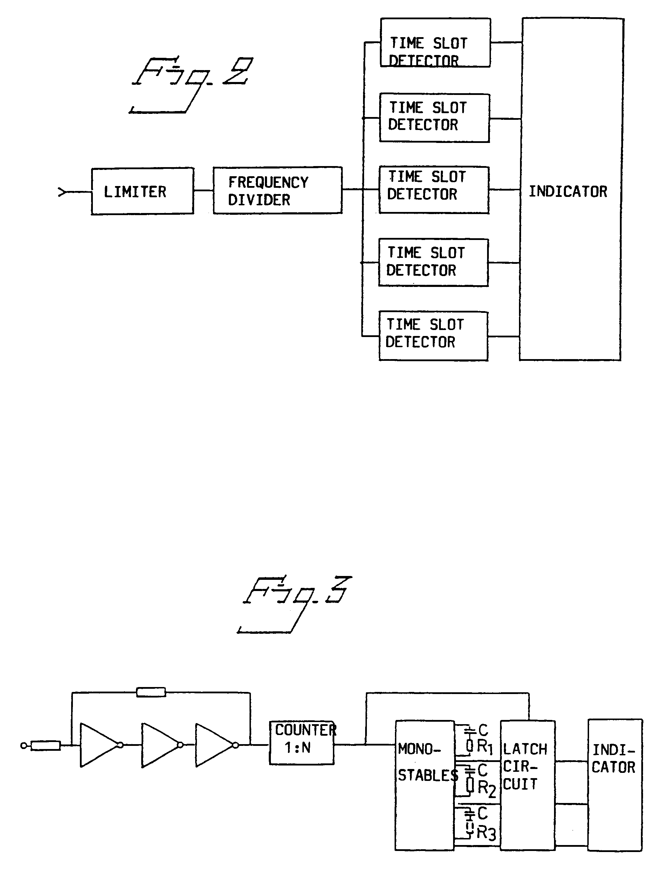

Fig. 2 shows a block diagram of the device in accordance with the present invention. The device essentially consists of three function blocks: a broadband limiter having a high impedance input, a time slot detector and an indicator. The combined signal occupying the line in question is delivered to the broadband limiter that because of its non-linear function amplifies the strongest frequency component of the signal while suppressing the weak components. Thereby, the output signal of the limiter gets a constant amplitude and a frequency corresponding to the strongest frequency component of the input signal.

The output signal of the limiter is delivered to the time slot detector, possibly after frequency division in a frequency divider. The time slot detector classifies its input signal on the basis of periodic time and, thus, is a kind of frequency meter. The purpose of the frequency divider is to divide the frequency N times and to average the possibly varying frequency of the signal of the limiter. Therefore, the output signal of the frequency divider has a periodic time equal to N times the average of the N latest periods of the output signal of the limiter. The classification performed by the time slot detector generates data which by decoding and indication by the indicator informs the operator about the frequency band in which the input signal of the limiter has its strongest frequency component.

Since the distribution of the frequencies of the different types of traffic is known, it is possible to infer, in addition to learn that traffic occupies the line, what type of traffic it is.

Fig. 3 shows a first embodiment of the invention. Here, the limiter is constructed of three inverters connected by two resistors to form an inverting amplifier. The amplifier has a high amplification and high input impedance. The frequency divider is a counter having N e.g. equal to 256. The time slot detector is a circuit having a number of monostables having different time constants CR1, CR2, etc. The outputs of the monostables are connected via a latch circuit to an indicator.

The limiter has a non-linear transfer function and amplifies the strongest frequency component while the other frequency components are suppressed. The frequency divider divides the frequency and averages this as mentioned previously. The signal from the counter triggers the various monostables returning to their respective stable states at different points of time corresponding to different time slots. When the signal from the counter turns low the output signals of the monostables are locked by the latch circuit and the output signals are forwarded to the indicator interpreting the output signals. The indicator indicates by means of light-emitting diodes the frequency range of the strongest frequency component. This solution is cheap and has a simple construction. However, inverters are not particularly suitable as amplifiers since you have poor control of the amplification and noise level.

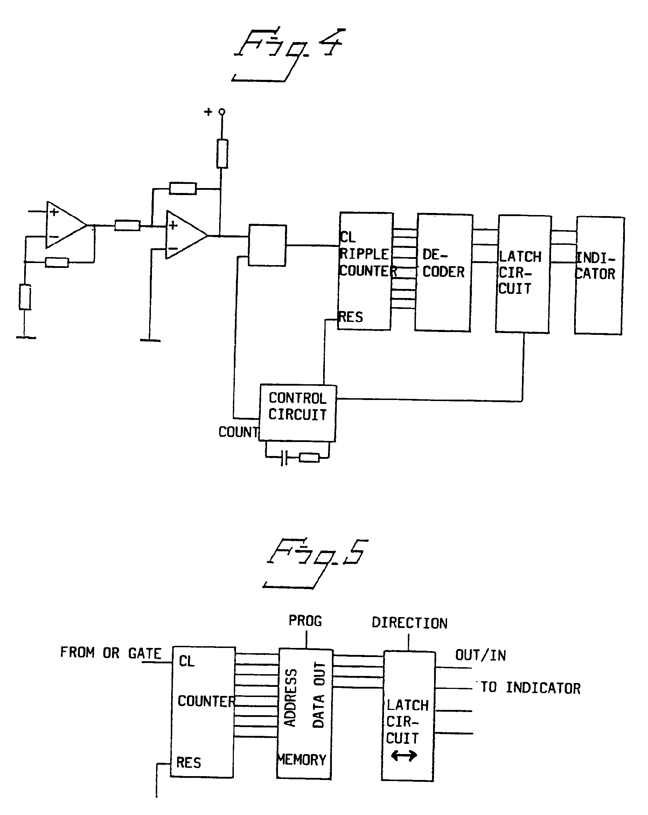

Fig. 4 shows a second, preferred embodiment of the present invention. Here, the limiter consists of two amplification stages, the first being constructed of an operational amplifier and the second of a comparator coupled as a Schmitt trigger. The comparator is fast operational amplifier with high bandwidth. As is known, a Schmitt trigger has hysteresis in the transfer diagram, i.e. the transition voltage from low to high is higher than the transition voltage from high to low. This results in that the noise lying between the transition voltages is not visible in the output signal from the Schmitt trigger.

The output signals of the limiter are delivered to an OR gate, the output signals of which is delivered to the clock input of a counter, preferably a ripple counter. The outputs of the counter are connected to a decoder interpreting the output signals of the counter. The output signals of the decoder are connected via a latch circuit to an indicator means or a microprocessor. The time slot indicator is controlled by a control circuit.

The function of the circuit is as follows. The limiter amplifies the strongest frequency component of the input signal while the weaker components are suppressed. The output signal from the limiter is a square wave having the same frequency as the strongest frequency component. The output signal of the limiter is delivered to an OR gate which also receives a signal COUNT from the control circuit. As long as the signal COUNT is zero the output signal is transmitted to the ripple counter while the output signal constantly is one when COUNT is one. Thus, the counter is stopped after the end of the measurement period and a reading can be done.

In this embodiment the decoder consists of a gate network continously sensing the outputs of the counter. The counter counts up to a number corresponding to the frequency of the signal from the limiter. The gate network classifies the frequency in those intervals corresponding to the frequencies of the different types of traffic. When the counter has been stopped and stabilized the output signal of the decoder is locked by the latch circuit. The output signal of the latch circuit is connected to an indicator or a microprocessor controlling some form of indicator. The indicator preferably indicates the different frequency ranges by means of light-emitting diodes. Preferably the indicator is arranged such that the relevant diode flashes in order to enhance the visibility.

The time lapse of one measuring sequence is chosen to 328 ms, which is set by the capacitor and the resistor of the control circuit.

As may be seen from the Figure, the Schmitt trigger consumes the highest current when the output signal thereof is low. Therefore, the circuit is arranged (not shown) such that the signal of the Schmitt trigger goes high when no measurement is performed.

Thus, the decoder of Fig. 4 has fixed frequency ranges in accordance with the configuration of the gate network. Thus, to change frequency ranges the gate network has to be reconstructed.

Fig. 5 shows another embodiment of the device according to the invention. Here, the decoder consists of a programable memory, e.g. an EEPROM. Instead of a gate network the counter directly addresses a storage location. The data of the storage locations correspond to the desired frequency ranges of the respective type of traffic. The output signals of the memory are transmitted via a latch circuit to an indicator or a microprocessor in the same way as before. By using a bidirectional latch circuit the memory may easily be programmed. The desired output signal is applied to the output/input of the latch circuit as the counter is incremented. In this way the storage locations of the memory are addressed without a need for access to all the pins of the memory circuit. The memory is switched to programming and the direction of the latch circuit is controlled by special pins of the respective circuits. As to the rest, this embodiment operates in the same way as the embodiment of Fig. 4.

The limiter of Fig. 3 can of course also be used together with the time slot detectors of Figs. 4 and 5. The limiter of Fig. 4 may also be used with the time slot detector of Fig. 3.

Traffic identifiers are often required to be provided with detectors for DC voltage levels. Comparators are known in the art classifying a DC voltage detected in a number of voltage ranges. The output signal of the detector is sent to an indicator via a decoder consisting of a gate network. Hereby the same type of decoder can be used even for the detection of the DC voltage levels.

Traffic identifiers are usually also provided with means for listening to the signal on the paired cable (not shown). This does not form any part of the present invention.

## Claims

1. Device for identifying traffic within different frequency ranges on a paired cable, comprising a broadband limiter connected to the paired cable and delivering an output signal having substantially constant amplitude and a frequency corresponding to the strongest frequency component of the input signal, and a frequency indicator indicating the frequency range of said frequency component, **characterized** in that the frequency indicator comprises monostables having different time constants said monostables receiving the signal from the limiter, or that the frequency indicator comprises a ripple counter receiving the signal from the limiter, and one or several gate networks which sense the output signals of the counter, the output signals of which correspond to different frequency ranges.

2. Device according to claim 1, **characterized** in that the frequency indicator, in addition to the ripple counter receiving the signal of the limiter, comprises a programmable memory, the storage locations of which are addressed by the output signal of the counter, the stored data corresponding to the different frequency ranges.

3. Device according to claim 2, **characterized** in that the programmable memory is connected to a bidirectional latch circuit that can be used for programming the memory.

4. Device according to any one of claims 1 to 3, **characterized** in that the limiter comprises a number of series-connected inverters coupled as an inverting amplifier having high amplification and high input impedance.

5. Device to any one of claims 1 to 3, **characterized** in that the limiter comprises a Schmitt trigger.

6. Device to any one of the preceding claims, **characterized** in that a microprocessor controls the indication of the different frequency ranges.

7. Device according to any one of the preceding claims, **characterized** in that the different frequency ranges are indicated by flashing light-emitting diodes.

## Patentansprüche

1. Einrichtung zum Identifizieren von Verkehr innerhalb unterschiedlicher Frequenzbereiche auf einem paarigen Kabel, die einen Breitbandbegrenzer, der mit dem paarigen Kabel verbunden ist und ein Ausgangssignal abgibt, das im wesentlichen konstante Amplitude und eine Frequenz aufweist, die der stärksten Frequenzkomponente des Eingangssignales entspricht, und eine Frequenzanzeige aufweist, die den Frequenzbereich der Frequenzkomponente anzeigt, dadurch gekennzeichnet, daß die Frequenzanzeige monostabile Elemente aufweist, die unterschiedliche Zeitkonstanten haben, wobei die monostabilen Elemente das Signal vom Begrenzer empfangen, oder daß die Frequenzanzeige einen Welligkeitszähler (ripple counter), der das Signal von dem Begrenzer empfängt, und ein oder mehrere Gatter-Netzwerke aufweist, die die Ausgangssignale des Zählers lesen, dessen Ausgangssignale unterschiedlichen Frequenzbereichen entsprechen.

2. Einrichtung nach Anspruch 1, dadurch gekennzeichnet, daß die Frequenzanzeige zusätzlich zu dem Welligkeitszähler, der das Signal vom Begrenzer empfängt, einen programmierbaren Speicher aufweist, dessen Speicherplätze durch das Ausgangssignal des Zählers adressiert werden, wobei die gespeicherten Daten den verschiedenen Frequenzbereichen entsprechen.

3. Einrichtung nach Anspruch 2, dadurch gekennzeichnet, daß der programmierbare Speicher mit einem bidirektionalen Trigger-Flip-Flop verbunden ist, der zum Programmieren des Speichers verwendet werden kann.

4. Einrichtung nach einem der Ansprüche 1 bis 3, dadurch gekennzeichnet, daß der Begrenzer eine Anzahl von in Reihe verbundenen Invertern aufweist, die als Umkehrverstärker mit hoher Verstärkung und hoher Eingangsimpedanz verbunden sind.

5. Einrichtung nach einem der Ansprüche 1 bis 3, dadurch gekennzeichnet, daß der Begrenzer einen Schmitt-Trigger aufweist.

6. Einrichtung nach einem der vorangehenden Ansprüche, dadurch gekennzeichnet, daß ein Mikroprozessor die Anzeige der verschiedenen Frequenzbereiche steuert.

7. Einrichtung nach einem der vorangehenden Ansprüche, dadurch gekennzeichnet, daß die verschiedenen Frequenzbereiche durch blinkende lichtemittierende Dioden angezeigt werden.

## Revendications

1. Dispositif pour identifier le trafic à l'intérieur de différentes gammes de fréquences sur un câble à paires, comprenant un limiteur à large bande connecté au câble à paires et produisant un signal de sortie présentant une amplitude sensiblement constante et une fréquence correspondant à la plus forte composante fréquentielle du signal d'entrée, et un indicateur de fréquences indiquant la gamme de fréquences de ladite composante fréquentielle, caractérisé en ce que l'indicateur de fréquences comprend des monostables présentant différentes constantes de temps, lesdits monostables recevant le signal provenant du limiteur, ou en ce que l'indicateur de fréquences comprend un compteur en cascade recevant le signal provenant du limiteur, et un ou plusieurs réseau(x) à portes qui détectent les signaux de sortie du compteur, dont les signaux de sortie correspondent à différentes gammes de fréquences.

2. Dispositif selon la rcvcndication 1, caractérisé en ce que l'indicateur de fréquence , en plus du compteur en cascade recevant le signal du limiteur, comprend une mémoire programmable dont les emplacements de mémorisation sont adressés par le signal de sortie du compteur, les données mémorisées correspondant aux différentes gammes de fréquences.

3. Dispositif selon la revendication 2, caractérisé en ce que la mémoire programmable est connectée à un circuit à verrouillage bidirectionnel qui peut être utilisé pour programmer la mémoire.

4. Dispositif selon l'une quelconque dcs revendications 1 à 3, caractérisé en ce que le limiteur comprend plusieurs inverseurs connectés en série couplés sous la forme d'un amplificateur inverseur présentant une forte amplification et une forte impédance d'entrée.

5. Dispositif selon l'une quelconque des revendications 1 à 3, caractérisé en ce que le limiteur comprend une bascule de Schmidt.

6. Dispositif selon l'une quelconque des revendications précédentes, caractérisé en ce qu'un microprocesseur commande l'indication des différentes gammes de fréquences.

7. Dispositif selon l'une quelconque des revendications précédentes, caractérisé en ce que les différentes gammes de fréquences sont indiquées par des diodes lumineuses à éclairs.
